# EUROPÄISCHE PATENTSCHRIFT

(11) **EP 0 373 411 B1**
(45) Veröffentlichungstag und Bekanntmachung des Hinweises auf die Patenterteilung: **14.01.1998**
(21) Anmeldenummer: 89121870.3
(22) Anmeldetag: 27.11.1989
(51) Int. Cl.: G06K 19/07, G06K 7/08, G11C 7/00, G06K 7/10

(54) **Datensicherheitselement für eine EDV-Einrichtung, Datensicherheitssystem und Verfahren zur Benutzung dieses Systems**
Data security element for an EDP device, data security system and method of its use
Elément de sécurisation de données pour un dispositif de traitement électronique de données, système de sécurisation de données et méthode d'application

(30) Priorität: 12.12.1988 DE 3841776; 06.02.1989 DE 3903454
(43) Veröffentlichungstag der Anmeldung: 20.06.1990
(73) Patentinhaber: SMARTDISKETTE GmbH, D-65510 Idstein (DE)
(72) Erfinder: Eisele, Raymund H., D-6270 Idstein (DE)
(74) Vertreter: Leineweber, Jürgen, Dipl.-Phys.

(56) Entgegenhaltungen:
- EP-A- 0 057 602
- EP-A- 0 203 683
- EP-A- 0 203 683
- WO-A-88/06324
- WO-A-89/01672
- FR-A- 2 610 430
- PATENT ABSTRACTS OF JAPAN vol. 11, no. 391 (P-649)(2838) 22. Dezember 1987

## Beschreibung

Die Erfindung bezieht sich auf ein der Datensicherung dienendes Element für eine EDV-Einrichtung, bestehend aus einer Zentraleinheit mit einer Diskettenstation, auf ein das Element verwendendes Datensicherheitssystem sowie auf ein Verfahren zur Benutzung eines Datensicherheitssystems dieser Art.

EDV-Einrichtungen der hier betroffenen Art sind Computer, speziell Personal-Computer, die im wesentlichen eine Zentraleinheit und eine Diskettenstation mit einer Schreib-/Leseeinrichtung (Schreib/Lesekopf) umfassen. Die Diskettenstation erlaubt es, auf Disketten vorhandene Daten und Programme in den Computer zu übertragen. Darüber hinaus besteht die Möglichkeit, auf die Disketten Programme und Daten zu schreiben, um sie unabhängig vom Computer speichern zu können.

Herkömmliche Disketten haben den Nachteil, daß sie leicht kopiert werden können. Es besteht also z.B. die Möglichkeit, geschützte Programme zu vervielfältigen, ohne Lizenzen zu bezahlen oder geschützte Daten zu speichern und an Nichtberechtigte weiterzugeben. Ferner kann nicht überprüft werden, ob ausführbare, auf einem Datenträger gespeicherte Programme dem Original entsprechen oder ob sie sogenannte Computerviren oder ein trojanisches Pferd enthalten. Zur Überprüfung der Benutzerberechtigung und/oder zum Ver- und Entschlüsseln von Daten ist es bekannt, Einschubkarten für den Datenbus oder Microkanal des Computers einzusetzen. Diese Karten sind jedoch teuer und erfordern Programme, die für jedes Betriebssystem speziell erstellt werden müssen.

Zum Stand der Technik gehören die folgenden Dokumente:

### EP-A-0 203 683:

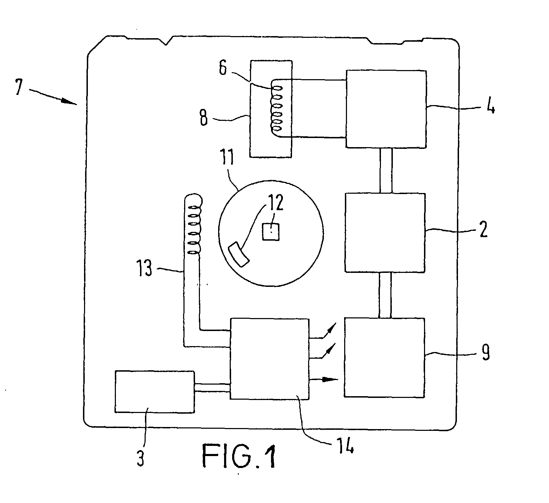

Dieses Dokument offenbart eine "transaction card" mit einem Prozessor. Typischerweise sind Karten dieser Art mit einer Schnittstelle (22 in Figur 1) ausgerüstet, die elektrische Kontakte umfaßt. Diese Schnittstelle erlaubt die Kommunikation des Prozessors der "transaction card" mit der Zentraleinheit einer EDV-Einrichtung nur über Terminals, die über eine korrespondierende "elektrische" Schnittstelle verfügen. Um eine "transaction card" dieser Art auch in Terminals mit Magnetstreifenleseeinrichtungen verwenden zu können, wird vorgeschlagen, sie mit einer zusätzlichen Schnittstelle auszurüsten und diese Schnittstelle so auszubilden, daß ein Magnetstreifenleser sie auslesen kann.

### FR-A-2 610 430:

Es wird eine Karte mit mindestens einem Speicher beschrieben. Die Karte verfügt über eine nach Art eines Wandlers ausgebildete Schnittstelle 12. Diese kann von einem Lesekopf 13 ausgelesen werden.

### EP-A-0 057 602:

Dieses Dokument bezieht sich auf eine Karte. Ziel ist es, dieser eine vielfältigere Verwendungsmöglichkeit zu geben. Dazu wird vorgeschlagen, die Karte selbst mit einer Tastatur auszurüsten.

### US-A-4 504 871:

Dieses Dokument offenbart ein Testbauteil für den Antrieb einer Diskettenstation. Es hat die äußere Form einer Diskette, die über ein mehradriges Kabel mit einer externen Steuereinrichtung verbunden ist. Diese Steuereinrichtung erzeugt oder empfängt Testsignale.

Keines der vorgenannten Dokumente offenbart besondere Maßnahmen zur Datensicherung in einer EDV-Einrichtung.

Der vorliegenden Erfindung liegt die Aufgabe zugrunde, den Zugriff zu den Daten in einer EDV-Einrichtung ohne großen technischen Aufwand sicherer zu machen, einen sicheren Kopierschutz zu ermöglichen und Daten sowie Programme vor unberechtiger Einsichtnahme und Veränderung zu schützen.

Erfindungsgemäß wird diese Aufgabe durch die in den Patentansprüchen enthaltenen Maßnahmen gelöst.

Der Vorteil der vorgeschlagenen Maßnahmen besteht darin, daß mit dem in dem Element vorhandenen Prozessor Operationen, wie z.B. das Verschlüsseln oder das Entschlüsseln von Daten oder eine Überprüfung der Benutzerberechtigung durchgeführt werden können und daß für den Datenaustausch zwischen dem Prozessor und der Zentraleinheit der EDV-Einrichtung gesonderte Schnittstellen oder betriebssystem-spezifische Einschubkarten nicht mehr vorhanden sein müssen.

Als Schnittstelle kann ein elektrisches Bauteil, z.B. eine oder mehrere Spulen dienen, welches in der Lage ist, Magnetfeldinformationen zu liefern oder zu empfangen, die den Magnetfeldinformationen der Magnetscheibe einer herkömmlichen Diskette entsprechen. Eine andere Möglichkeit besteht darin, im Element eine Magnetscheibe und dieser einen Schreib-/Lesekopf zuzuordnen. Diese Maßnahme erlaubt es, die Magnetscheibe als Zwischenspeicher zu verwenden, indem die vom Prozessor gelieferten Daten zunächst auf den Datenträger geschrieben und dann vom Schreib-/Lesekopf der Diskettenstation der EDV-Einrichtung gelesen werden. Natürlich ist auch der umgekehrte Datenfluß - Schreiben von Daten durch den Schreib-/Lesekopf der Diskettenstation auf die Magnetscheibe und Lesen der Daten vom Schreib-/Lesekopf in der Diskette möglich.

Zweckmäßig ist, in dem Element noch zusätzliche Daten- und/oder Programmspeicher unterzubringen, mit denen der Prozessor kommunizieren kann. Wie weiter unten dargelegt, wird dadurch die Vielfalt der Anwendungsmöglichkeiten des erfindungsgemäßen Elementes besonders groß.

Bei einem Element mit der äußeren Form einer Diskette kann die für die elektronischen Bauteile benötigte Energie mit Hilfe eines Stromgenerators erzeugt werden, dessen Rotor von der Antriebswelle für die Magnetscheibe angetrieben wird. Die in den Stator induzierten Stromstöße werden in einem Stromregulator derart aufbereitet (gleichgerichtet, begrenzt), daß die Batterie ersetzt werden kann. Bei einer Verwendung von Speichern, die ständig mit Strom versorgt werden müssen, ist die zusätzliche Verwendung einer Batterie erforderlich. Der vom Generator gelieferte Strom kann in diesem Fall auch dazu dienen, die Ladung der Batterie zu erneuern oder zu ergänzen.

Der im weiteren noch verwendete Ausdruck Diskette soll im Sinne dieser Erfindung so verstanden werden, daß es sich um ein Element handelt, das die äußere Form einer Diskette hat. Die Schnittstelle des Elementes ist so ausgebildet, daß sie mit der Schreib-/ Leseeinrichtung der Diskettenstation Daten austauschen kann. Die Funktion der Datenspeicherung kann der dem Prozessor zugeordnete Speicher übernehmen. Befindet sich im Bereich der Schnittstelle ein elektrisches Bauteil, z.B. eine oder mehrere Spulen, dann müssen diese in der Lage sein, Magnetfeldinformationen zu liefern oder zu verarbeiten, die den Informationen der Magnetscheibe einer herkömmlichen Diskette entsprechen. Die Schnittstelle muß also in der Lage sein, die Magnetscheibe zu simulieren. Diese Eigenschaft der Schnittstelle ermöglicht es, Daten aus dem Prozessor im erfindungsgemäßen Element in die Zentraleinheit der EDV-Einrichtung zu übertragen, z.B. Daten, die die Nutzungsberechtigung erkennen lassen. Die Schnittstelle kann außerdem vom Schreibkopf gelieferte Signale aufnehmen und an den Prozessor im erfindungsgemäßen Element weiterleiten. Ein derartiger Datenaustausch eröffnet eine Vielzahl von Arbeitsverfahren, mit denen die gestellte Aufgabe gelöst und weitere Ziele erreicht werden können.

Vorteile, Einzelheiten und Anwendungsmöglichkeiten der Erfindung sollen anhand von in den Figuren schematisch dargestellten Ausführungsbeispielen erläutert werden.

Es zeigen:
- Figuren 1 und 2: je eine Diskette nach der Erfindung (SMART-Diskette) und
- Figuren 3 und 5: unterschiedliche Gestaltungen der SMART-Diskette (PIN-SMART, SUPER-SMART-Diskette).

Figur 1 zeigt eine Diskette 7 nach der Erfindung. Sie ist mit einem Prozessor 2 (z.B. mit integriertem Speicher), einer Batterie 3 und einem Treiber 4 ausgerüstet. In dem Bereich (öffnung 8), welcher dem Schreib-/Lesekopf einer herkömmlichen Diskettenstation zugeordnet ist, befindet sich die erfindungsgemäße Schnittstelle 6, über die ein Datenaustausch zwischen dem Prozessor 2 und dem Schreib-/Lesekopf einer Diskettenstation stattfinden kann. Als Symbol für ein oder mehrere elektrische Bauteile, die in der Lage sind, Magnetfeldinformationen zu erzeugen und zu empfangen, ist eine Spule dargestellt. Die Schnittstelle 6 ist mit dem Treiber 4 verbunden. Dieser ist seinerseits mit dem Prozessor 2 verbunden, dem der Speicher 9 (z.B. zusätzlich) zugeordnet ist.

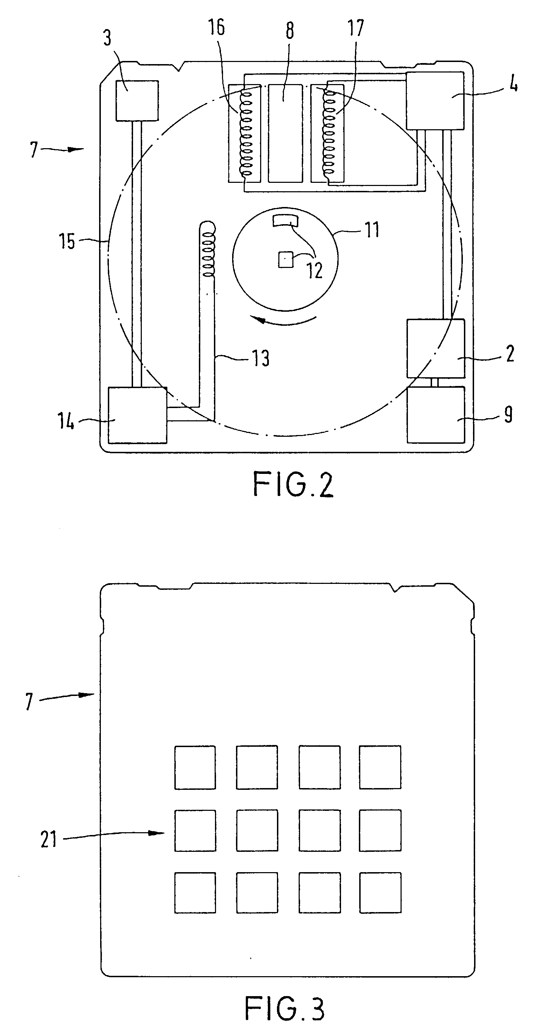

Die in Figur 2 dargestellte Diskette 7 unterscheidet sich von der in Figur 1 dargestellten Diskette 7 dadurch, daß eine Magnetscheibe 15 vorhanden ist und daß anstelle der Magnetschnittstelle 6 Schreib-/Leseköpfe 16 und 17 bekannter Bauart vorhanden sind. Zweckmäßig ist die Anordnung so getroffen, daß sich - wie in Figur 2 dargestellt - ein Schreibkopf 16 und ein Lesekopf 17 seitlich neben der öffnung 8 befinden. Bei dieser Ausführungsform erfolgt z.B. die Datenübertragung vom Prozessor 2 zur Zentraleinheit des zugehörigen Rechners in der Weise, daß der Kopf 16 diese Daten auf die Magnetscheibe 15 als Zwischenträger schreibt und diese dann vom Schreib-/Lesekopf der Diskettenstation des Rechners gelesen werden. Ein Kontrollschritt (Lesen durch den Kopf 17 und Freigabe) kann dazwischen geschaltet sein.

Zur Versorgung der einzelnen Bauteile mit elektrischer Energie ist die Batterie 3 vorgesehen. Zusätzlich kann ein Stromgenerator vorhanden sein, der aus dem Rotor 11 (gekoppelt mit dem Antriebssystem 12 der nicht vorhandenen Magnetscheibe), dem Stator 13 und dem Stromregulator 14 besteht. Der Stromregulator 14 dient der Aufbereitung der Versorgungsströme und/oder der Aufrechterhaltung einer ausreichenden Ladung in der Batterie 3.

Die erfindungsgemäßen Schnittstellen 6 bzw. 15,16,17 im Bereich der öffnung 8 erlauben die Kommunikation des Prozessors 2 mit der Zentraleinheit eines Rechners über dessen Diskettenstation. Auf die im einzelnen damit verbundenen Vorteile wird weiter unten noch eingegangen.

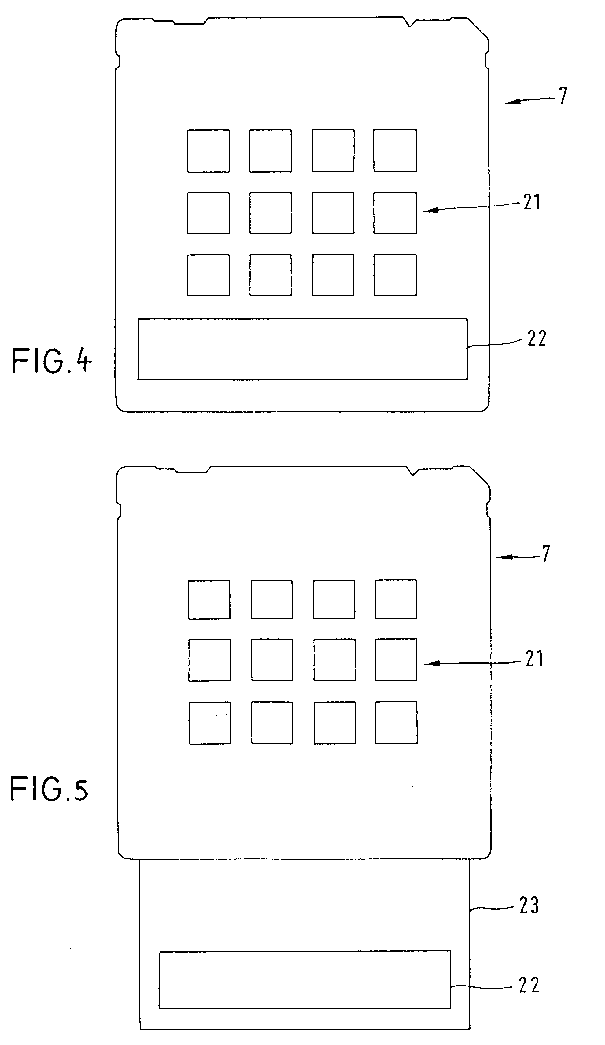

Die Figuren 3 bis 5 zeigen äußere Gestaltungen der Diskette 7, z.B. mit Zahlenfeld bzw. Tastatur 21 und/oder Anzeige 22. Beim Ausführungsbeispiel nach Figur 4 können sich die Anzeige 22 (wie dargestellt) und auch die Tastatur 21 auf einem aus der Diskette 7 herausziehbaren oder ausklappbaren Träger 23 befinden, welcher physisch und elektrisch mit der Diskette 7 verbunden ist, so daß die Anzeige auch dann sichtbar ist, wenn sich die Diskette in der Station des Rechners befindet.

Ein besonderer Vorteil der beschriebenen Disketten 7 liegt darin, daß sie einen Prozessor aufweisen, in dem Operationen, wie die überprüfung der Benutzerberechtigung, das Ver- und Entschlüsseln von Daten, Maßnahmen zum Kopierschutz, usw. durchgeführt werden können. Zur Überprüfung der Benutzerberechtigung wird zweckmäßig eine PIN (Persönliche Identifikations-Nummer) entweder über die Tastatur der Zentraleinheit der EDV-Einrichtung eingegeben und über die Schnittstelle 6 bzw. 15,16,17 in den Prozessor 2 übertragen oder - wenn das Element 7 selbst eine Tastatur 21 aufweist - über diese Tastatur dem Prozessor 2 zugeführt; dort findet eine Überprüfung der PIN auf ihre Richtigkeit statt und das Ergebnis der Überprüfung wird über die jeweilige Schnittstelle an die EDV-Einrichtung zurückgegeben. Nach einer ähnlichen Operation ist dann auch die Änderung der PIN oder anderer im Prozessor 2 oder seiner Speicher 9 gespeicherten Daten möglich.

Zusätzlich kann mit den erfindungsgemäßen Elementen auch eine Prüfung dahingehend stattfinden, ob der Benutzer mit dem richtigen Rechner arbeitet. Dazu wird nach der PIN-Prüfung von der Zentraleinheit ein Geheimcode angefordert, dessen Prüfung ebenfalls im Prozessor 2 stattfindet. Das Ergebnis der Prüfung kann auf der Anzeige 22 dargestellt werden. Vorteilhaft ist dabei die in Figur 4 dargestellte ausklappbare oder ausziehbare Anzeige, die das Ergebnis erkennen läßt, ohne das Element aus seiner Station herauszunehmen.

Von besonderem Vorteil ist die Möglichkeit, den Prozessor 2 in den jeweiligen Elementen auch zur Verschlüsselung oder Entschlüsselung von Daten verwenden zu können, indem die unverschlüsselten Daten über die Schnittstelle 6 bzw. 15,15,17 dem Prozessor 2 zugeführt, dort verschlüsselt und danach verschlüsselt über diese Schnittstelle zurückübertragen werden. Es können beispielsweise Nachrichtenechtheitscodes errechnet und überprüft werden, digitale Signaturen, z.B. gemäß dem RSA-Algorithmus erzeugt und überprüft werden oder digitale Umschläge erzeugt und geöffnet werden.

Um das jeweilige Element 7 als Ver- oder Entschlüsselungsgerät einzusetzen, ist es zweckmäßig, daß ein oder mehrere kryptographische Algorithmen, geheime Schlüssel o.dgl.im Speicher des Elementes geladen werden, und zwar zweckmäßigerweise nicht kopierbar.

Um die Ausführung unberechtigt kopierter Programme zu vermeiden, können Teile eines Programms oder das gesamte Programm im Prozessor des Elementes ausgeführt werden. Insbesondere dann, wenn Teile des Programms in der Zentraleinheit der zugehörigen EDV-Einrichtung und weitere Teile im Prozessor 2 des jeweiligen Elementes gespeichert sind, ist ein sicherer Kopierschutz gewährleistet.

## Patentansprüche

1. Element (7) für eine EDV-Einrichtung mit einer Zentraleinheit und einer Diskettenstation, wobei das Element (7) der Sicherung von in der Zentraleinheit vorhandenen Daten gegen einen unerlaubten Zugriff dient, mit den folgenden Merkmalen:
- das Element weist ein Gehäuse auf, das die äußere Form einer Diskette hat;
- das Element (7) ist mit einem Prozessor (2) und einem mit mindestens einem Teil eines Datensicherheitsprogrammes geladenen Speicher (9) ausgerüstet, welche dazu geeignet sind, der Sicherung der Daten der Zentraleinheit dienende Operationen, wie die Überprüfung der Benutzerberechtigung, das Verschlüsseln und Entschlüsseln von Daten sowie Maßnahmen zum Kopierschutz durchzuführen.
- das Element (7) ist mit einer Schnittstelle (6;15,16,17) ausgerüstet, welche derart ausgebildet ist, daß ein Datenaustausch zwischen dem Prozessor (2) des Elementes (7) und der Zentraleinheit der EDV-Einrichtung über die in der Diskettenstation ohnehin vorhandene Schreib-/Leseeinrichtung durchführbar ist;
- das Element (7) ist mit einem Treiber (4) ausgerüstet, mit dessen Hilfe die vom Prozessor (2) gelieferten Signale in die im Bereich der Schnittstelle (6;15,16,17) benötigten magnetischen Informationen umgesetzt und die aus der Zentraleinheit über die Schnittstelle(6;15,16,17) in das Element (7) gelangenden Signale aufbereitet werden,
- das Element (7) ist mit einer Stromversorgung (3;11,13) für die elektronischen Bauteile (2,4,9) ausgerüstet.

2. Element (7) nach Anspruch 1, dadurch gekennzeichnet, daß sich im Bereich der Öffnung (8), die bei in die Diskettenstation eingestecktem Element (7) dem Schreib-/Lesekopf der Diskettenstation zugeordnet ist, ein elektrisches Bauteil (6), z.B. eine oder mehrere Spulen, befindet, welches in der Lage ist, Magnetfeldinformationen zu liefern und zu empfangen, die den Magnetfeldinformationen der Magnetscheibe einer herkömmlichen Diskette entsprechen, und damit den gewünschten Datenaustausch zwischen dem Prozessor (2) des Elementes (7) und der Zentraleinheit der EDV-Einrichtung ermöglicht.

3. Element (7) nach Anspruch 1, dadurch gekennzeichnet, daß im Element (7) eine Magnetscheibe (15) vorhanden ist und daß diese Magnetscheibe gemeinsam mit einem Schreib-/Lesekopf (16,17) die Schnittstelle bildet, die den gewünschten Datenaustausch zwischen dem Prozessor (2) des Elementes (7) und der Zentraleinheit der EDV-Einrichtung ermöglicht.

4. Element (7) nach einem der Ansprüche 1, 2 oder 3, dadurch gekennzeichnet, daß es mit zusätzlichen Daten- und/oder Programmspeichern (9) ausgerüstet ist, mit denen der Prozessor (2) kommunizieren kann.

5. Element (7) nach einem der vorhergehenden Ansprüche, dadurch gekennzeichnet, daß es mit einer Batterie und/oder mit einem Stromgenerator (11,13) ausgerüstet ist, dessen Rotor (11) mit dem Antriebssystem (12) für die Magnetscheibe gekoppelt ist.

6. Element (7) nach Anspruch 5, dadurch gekennzeichnet, daß der Generator (11,13) als Ladegerät für die Batterie (3) dient und daß der Generator und/oder die Batterie den Prozessor (2) und die übrigen elektronischen Bauteile, soweit sie Strom benötigen, mit Strom versorgen.

7. Element (7) nach einem der vorhergehenden Ansprüche, dadurch gekennzeichnet. daß es mit einem Zahlenfeld und einer Tastatur (21) ausgerüstet ist.

8. Element (7) nach einem der vorhergehenden Ansprüche, dadurch gekennzeichnet, daß es mit einer Anzeige (22), zweckmäßig einer LCD-Anzeige ausgerüstet ist.

9. Element (7) nach Anspruch 7 oder 8, dadurch gekennzeichnet, daß sich die Tastatur und/oder die Anzeige (22) auf einem aus dem Element (7) herausziehbaren oder herausklappbaren Träger (23) befindet, der mit dem Element (7) physisch und elektrisch verbunden ist.

10. Datensicherheitssystem für eine EDV-Einrichtung, bestehend aus einer Zentraleinheit mit einer Diskettenstation und aus Mitteln, die der Sicherung von in der Zentraleinheit vorhandenen Daten gegen einen unerlaubten Zugriff dienen, wobei
die Mittel zur Datensicherung ein Element (7) gemäß Anspruch 1 umfassen.

11. System nach Anspruch 10, dadurch gekennzeichnet, daß der Speicher (9) des Elementes (7)
- mit festen, nicht kopierbaren Programmen geladen ist,
- mit einem oder mehreren kryptographischen Algorithmen und/oder geheimen Schlüsseln geladen ist oder
- mit Programmen geladen ist, welche nach dem Laden im Prozessor (2) des Elementes (7) ausgeführt werden.

12. Verfahren zur Benutzung eines Datensicherheitssystems gemäß Anspruch 10, dadurch gekennzeichnet, daß bestimmte Teile eines Programms im Element (7) gespeichert sind und im Prozessor (2) des Elementes (7) ablaufen und daß an bestimmten Stellen des Programms Daten über die Schnittstelle (6;15,16,17) an das Element übertragen, dort verarbeitet und andere Daten über die Schnittstelle zurückgegeben werden.

13. Verfahren nach Anspruch 12, dadurch gekennzeichnet, daß mit Hilfe des Prozessors (2) im Element (7)
- die Überprüfung der Richtigkeit einer PIN durchgeführt wird,
- die Überprüfung der Richtigkeit einer PIN durchgeführt wird, nach Feststellung der Richtigkeit der PIN der Zentraleinheit der EDV-Einrichtung dieses mitgeteilt wird und danach von der Zentraleinheit ein Geheimcode angefordert und ebenfalls im Prozessor (2) überprüft wird,
- Daten ver- oder entschlüsselt werden,
- Daten ver- oder entschlüsselt werden, für die über die Schnittstelle (6;15,16,17) empfangenen Daten ein Programm- oder Nachrichtenechtheitscode errechnet oder überprüft wird und das Ergebnis über die Schnittstelle (6;15,16,17) zurückübertragen, im Element (7) gespeichert oder auf einer Anzeige (22) angezeigt wird,
- für über die Schnittstelle (6;15,16,17) empfangene Daten eine elektronisch digitale Signatur, z.B. gemäß dem RSA-Algorithmus, erzeugt oder überprüft wird und das Ergebnis über die Schnittstelle (6;15,16,17) zurückübertragen, im Element (7) gespeichert oder auf einer Anzeige (22) angezeigt wird oder
- für über die Schnittstelle (6;15,16,17) empfangene Daten ein digitaler Umschlag, z.B. RSA-Algorithmus, erzeugt oder geöffnet wird und das Ergebnis über die Schnittstelle (6;15,16,17) zurückübertragen wird.

## Claims

1. Element (7) for an EDP device having a central unit and a diskette station, the element (7) serving to protect the data present in the central unit against an unauthorized access, having the following features:
- the element has a casing which has the external form of a diskette;
- the element (7) is equipped with a processor (2) and a memory (9) which is loaded with at least a part of a data protection program, which processor and memory are suitable for carrying out operations, such as checking the user authorization, the encrypting and decrypting of data and measures to prevent copying, which operations serve to secure the data of the central unit;
- the element (7) is equipped with an interface (6; 15, 16, 17) which is designed so that a data exchange can be performed between the processor (2) of the element (7) and the central unit of the EDP device via the write/read device which is in any case present in the diskette station;
- the element (7) is equipped with a driver (4) with the aid of which the signals supplied by the processor (2) are converted into the magnetic information items needed in the region of the interface (6; 15, 16, 17) and the signals fed to the element (7) from the central unit via the interface (6;15, 16, 17) are processed;
- the element (7) is equipped with a current supply (3; 11, 13) for the electronic components (2, 4, 9).

2. Element (7) according to Claim 1, characterized in that there is situated, in the vicinity of the opening (8) assigned to the write/read head of the diskette station with the element (7) inserted in the diskette station, an electrical component (6), for example one or more coils, which is capable of supplying and receiving magnetic-field information items which correspond to the magnetic-field information items of the magnetic disk of a conventional diskette and, consequently, make possible the desired data exchange between the processor (2) of the element (7) and the central unit of the EDP device.

3. Element (7) according to Claim 1, characterized in that a magnetic disk (15) is present in the element (7) and in that said magnetic disk forms, jointly with a write/read head (16, 17) the interface which makes possible the desired data exchange between the processor (2) of the element (7) and the central unit of the EDP device.

4. Element (7) according to one of Claims 1, 2 or 3, characterized in that it is equipped with additional data memories and/or program memories (9) with which the proccessor (2) can communicate.

5. Element (7) according to one of the preceding claims, characterized in that it is equipped with a battery and/or with a current generator (11, 13) whose rotor (11) is coupled to the drive system (12) for the magnetic disk.

6. Element (7) according to Claim 5, characterized in that the generator (11, 13) serves as a charging device for the battery (3) and in that the generator and/or the battery provide the processor (2) and the remaining electronic components with current insofar as they need current.

7. Element (7) according to one,of the preceding claims, characterized in that it is equipped with a numerical array and a keyboard (21).

8. Element (7) according to one of the preceding claims, characterized in that it is equipped with a display (22), expediently an LCD display.

9. Element (7) according to Claim 7 or 8, characterized in that the keyboard and/or the display (22) are/is situated on a support (23) which can be pulled out or folded out of the element (7) and which is connected physically and electrically to the element (7).

10. Data protection system for an EDP device, comprising a central unit having a diskette station and means which serve to protect data present in the central unit against an unauthorized access, the means for data protection comprising an element (7) in accordance with Claim 1.

11. System according to Claim 10, characterized in that the memory (9) of the element (7)
- is loaded with permanent, noncopyable programs,
- is loaded with one or more cryptographic algorithms and/or secret codes, or
- is loaded with programs which are carried out after loading in the processor (2) of the element (7).

12. Method for using a data protection system in accordance with Claim 10, characterized in that certain parts of a program are stored in the element (7) and are executed in the processor (2) of the element (7), and in that, at certain points in the program, data are transferred via the interface (6; 15, 16, 17) to the element and processed therein, and other data are returned via the interface.

13. Method according to Claim 12, characterized in that, with the aid of the processor (2) in the element (7),
- the correctness of a PIN is checked,
- the correctness of a PIN is checked, after the correctness of the PIN has been established this is communicated to the central unit of the EDP device and a secret code is then requested by the central unit and also checked in the processor (2),
- data are encrypted or decrypted,
- data are encrypted or decrypted, a program code or message genuineness code is calculated or checked for the data received via the interface (6; 15, 16, 17) and the result is retransmitted via the interface (6; 15, 16, 17), stored in the element (7) or displayed on a display (22),
- for data received via the interface (6; 15, 16, 17), an electronically digital signature, for example in accordance with the RSA algorithm is generated or checked and the result is retransmitted via the interface (6; 15, 16, 17), stored in the element (7) or displayed on a display (22), or
- for data received via the interface (6; 15, 16, 17), a digital envelope, for example RSA algorithm, is generated or opened and the result is retransmitted via the interface (6; 15, 16, 17).

## Revendications

1. Elément (7) pour un dispositif de traitement électronique de données comportant une unité centrale et un poste à disquette, cet élément (7) servant à la protection de données contenues dans l'unité centrale contre un accès non autorisé, ayant les caractéristiques suivantes :
- l'élément présente un boîtier qui a la forme extérieure d'une disquette,
- l'élément (7) est équipé d'un processeur (2) et d'une mémoire (9) chargée avec au moins une partie d'un programme de protection de données, qui sont aptes à exécuter des opérations servant à la protection des données de l'unité centrale, telles que le contrôle de l'autorisation de l'utilisateur, le codage et le décodage de données, ainsi que des mesures de protection anticopie,
- l'élément (7) est équipé d'une interface (6 ; 15, 16, 17) qui est conçue de façon que puisse être exécuté un échange de données entre le processeur (2) de l'élément (7) et l'unité centrale du dispositif informatique par le dispositif de lecture-écriture existant déjà dans le poste à disquette,
- l'élément (7) est équipé d'une commande (4) à l'aide de laquelle les signaux fournis par le processeur (2) sont convertis en les informations magnétiques requises dans la zone de l'interface (6 ; 15, 16, 17) et les signaux arrivant de l'unité centrale à l'élément (7) par l'interface (6 ; 15, 16, 17) sont traités,
- l'élément (7) est équipé d'une alimentation en courant (3 ; 11, 13) pour les composants électroniques (2, 4, 9).

2. Elément (7) selon la revendication 1, caractérisé par le fait que dans la zone de l'ouverture (8) affectée à la tête de lecture-écriture du poste à disquette, lorsque l'élément (7) est introduit dans celui-ci, se trouve un composant électrique (6), par exemple une ou plusieurs bobines, qui est à même de fournir et de recevoir des informations de champ magnétique qui correspondent aux informations de champ magnétique du disque magnétique d'une disquette classique, et ainsi permet l'échange désiré de données entre le processeur (2) de l'élément (7) et l'unité centrale du dispositif informatique.

3. Elément (7) selon la revendication 1, caractérisé par le fait qu'il contient un disque magnétique (15) et que ce disque magnétique forme avec une tête de lecture-écriture (16, 17) l'interface qui permet l'échange désiré de données entre le processeur (2) de l'élément (7) et l'unité centrale du dispositif informatique.

4. Elément (7) selon l'une des revendications 1, 2 et 3, caractérisé par le fait qu'il est équipé de mémoires supplémentaires de données et/ou de programmes (9) avec lesquelles le processeur (2) peut communiquer.

5. Elément (7) selon l'une des revendications précédentes, caractérisé par le fait qu'il est équipé d'une batterie et/ou d'un générateur de courant (11, 13) dont le rotor (11) est accouplé au système d'entraînement (12) entraînant le disque magnétique.

6. Elément (7) selon la revendication 5, caractérisé par le fait que le générateur (11, 13) sert de chargeur pour la batterie (3) et que le générateur et/ou la batterie alimentent en courant le processeur (2) et les autres composants électroniques s'ils ont besoin de courant.

7. Elément (7) selon l'une des revendications précédentes, caractérisé par le fait qu'il est équipé d'un panneau numérique et d'un clavier (21).

8. Elément (7) selon l'une des revendications précédentes, caractérisé par le fait qu'il est équipé d'un afficheur (22), avantageusement d'un afficheur à cristaux liquides.

9. Elément (7) selon l'une des revendications 7 et 8, caractérisé par le fait que le clavier et/ou l'afficheur (22) se trouve(nt) sur un support (23) qui peut être sorti de l'élément (7) par tirage ou basculement et est relié physiquement et électriquement à l'élément (7).

10. Système de protection de données pour un dispositif informatique, constitué d'une unité centrale avec un poste à disquette et de moyens qui servent à la protection de données contenues dans l'unité centrale contre un accès non autorisé, les moyens de protection de données comprenant un élément (7) selon la revendication 1.

11. Système selon la revendication 10, caractérisé par le fait que la mémoire (9) de l'élément (7)
- est chargée avec des programmes fixes non copiables,
- est chargée avec un ou plusieurs algorithmes cryptographiques et/ou codes secrets ou
- est chargée avec des programmes qui, après le chargement, sont exécutés dans le processeur (2) de l'élément (7).

12. Procédé d'utilisation d'un système de protection de données selon la revendication 10, caractérisé par le fait que des parties déterminées d'un programme sont mémorisées dans l'élément (7) et se déroulent dans le processeur (2) de l'élément (7), et qu'à des endroits déterminés du programme, des données sont transmises par l'interface (6 ; 15, 16, 17) à l'élément et y sont traitées et d'autres données sont renvoyées par l'interface.

13. Procédé selon la revendication 12, caractérisé par le fait qu'à l'aide du processeur (2) de l'élément (7),
- le contrôle de l'exactitude d'une PIN est exécuté,
- le contrôle de l'exactitude d'une PIN est exécuté, après constatation de l'exactitude de la PIN, cela est communiqué à l'unité centrale du dispositif de traitement électronique de données et après cela, un code secret est demandé par l'unité centrale et également contrôlé dans le processeur (2),
- des données sont codées ou décodées,
- des données sont codées ou décodées, pour les données reçues par l'interface (6 ; 15, 16, 17) est calculé ou contrôlé un code de programme ou d'authenticité d'informations, et le résultat est renvoyé par l'interface (6 ; 15, 16, 17), mis en mémoire dans l'élément (7) ou affiché sur un afficheur (22),
- pour des données reçues par l'interface (6 ; 15, 16, 17) est produite ou contrôlée une empreinte numérique électronique, par exemple selon l'algorithme RSA, et le résultat est renvoyé par l'interface (6 ; 15, 16, 17), mis en mémoire dans l'élément (7) ou affiché sur un afficheur (22) ou
- pour des données reçues par l'interface (6 ; 15, 16, 17) est produite ou ouverte une enveloppe numérique, par exemple par un algorithme RSA, et le résultat est renvoyé par l'interface (6 ; 15, 16, 17).
